# NEW EUROPEAN PATENT SPECIFICATION

(11) **EP 2 154 223 B3**
(45) Date of publication and mention of the opposition decision: **29.11.2017**
(45) Mention of the grant of the patent: 09.01.2013
(21) Application number: 09173778.3
(22) Date of filing: 26.06.2006
(51) Int. Cl.: C09K 5/04, C07D 471/00, B01J 37/00, C08J 9/14

(54) **Thermal insulating foam comprising HFO-1233zd as blowing agent**
Wärmeisolierender Schaumstoff, der HFO-1233zd als Treibmittel enthält
Mousse d'isolation thermique comprenant du HFO-1233zd comme agent d'expansion

(30) Priority: 24.06.2005 US 693853 P; 21.03.2006 US 784731 P
(43) Date of publication of application: 17.02.2010
(62) Divisional of application: 06785686.4
(73) Proprietor: Honeywell International Inc., Morris Plains, NJ 07950 (US)
(72) Inventor: Bowman, James, M., Geneva, IL 60134 (US); Williams, David, J., East Amherst, NY 14051 (US)
(74) Representative: Crooks, Elizabeth Caroline

(56) References cited:
- WO-A1-2008//121778
- WO-A1-2008//121783
- WO-A1-2008//121785
- WO-A2-2004//037913
- US-A- 5 710 352
- US-A- 5 710 352
- US-A- 5 811 603
- US-A- 6 013 846
- US-A1- 2004/ 256 594
- WP-A2- 2005/ 105 947
- LOGSDON P.B.: 'Proceedings of Polyurethanes Expo '98', September 1998, THE SOCIETY OF THE PLASTICS INDUSTRY, WASHINGTON pages 337 - 338
- "Polyurethanes 2011 Technical Conference -Advance Program", Center for the Polyurethanes Industry, American Chemistry Council
- WOODS G.: 'The ICI Polyurethanes Book', vol. 2ND. ED., 1990, JOHN WILEY & SONS, CHICHESTER pages 55,85, - 86, 127
- "Household Refrigerator: Low GWP Blowing Agent Performance Update" by James M. Bowman and Yordani Sinaga
- "Honeywell's Next Generation (LGWP) of Blowing Agents for Global Spray Foam Applications" by Mary Bogdan, Clifford Gittere, and Michael Ross
- "Refrigerators: A Look at What's Inside (internet citation)
- "GE launches new cyclopentane refrigerators" (internet citation)
- safety data sheet for cis-HFCO-1233zd

## Description

### FIELD OF THE INVENTION

This invention relates to foams and methods of foaming, and uses of foams.

### BACKGROUND

Fluorocarbon based fluids have found widespread use in many commercial and industrial applications, including as aerosol propellants and as blowing agents. Because of certain suspected environmental problems, including the relatively high global warming potentials, associated with the use of some of the compositions that have heretofore been used in these applications, it has become increasingly desirable to use fluids having low or even zero ozone depletion potential, such as hydrofluorocarbons ("HFCs"). Thus, the use of fluids that do not contain substantial amounts of chlorofluorocarbons ("CFCs") or hydrochlorofluorocarbons ("HCFCa") is desirable. Furthermore, some HFC fluids may have relatively high global warming potentials associated therewith, and it is desirable to use hydrofluorocarbon or other fluorinated fluids having as low global warming potential as possible while maintaining the desired performance in use properties. Additional, the use of single component fluids or azeotrope-like mixtures, which do not substantially fractionate on boiling and evaporation, is desirable in certain circumstances.

As suggested above, concern has been increasing in recent years about potential damage to the earth's atmosphere and climate, and certain chlorine-based compounds have been identified as particularly problematic in this regard. The use of chlorine-containing compositions (such as chlorofluorocarbons (CFC's), hydrochlorofluorocarbons (HCF's) and the like) as the working fluid in heat transfer systems, such as in refrigeration and air-conditioning systems, has become disfavored because of the ozone-depleting properties associated with many of such compounds. There has thus been an increasing need for new fluorocarbon and hydrofluorocarbon compounds and compositions that are attractive alternatives to the compositions heretofore used in these and other applications. For example, it has become desirable to retrofit chlorine-containing systems, such as blowing agent systems or refrigeration systems, by replacing chlorine-containing compounds with non-chlorine-containing compounds that will not deplete the ozone layer, such as hydrofluorocarbons (HFC's). Industry in general is continually seeking new fluorocarbon based mixtures that offer alternatives to, and are considered environmentally safer substitutes for, CFCs and HCFCs. It is considered important in many cases, however, that any potential substitute must also possess those properties present in many of the most widely used fluids, such as imparting excellent thermal insulating properties and other desirable foam characteristics when used as blowing agents, such as appropriate chemical stability, low- or no- toxicity, low or no-flammability, among others.

Furthermore, it is generally considered desirably for CFC blowing agent substitutes to be effective without major engineering changes to conventional foam generating systems.

Methods and compositions for making conventional foamed materials, such as for example thermoplastic materials and thermosetting materials, have long been known. These methods and compositions have typically utilized chemical and/or physical blowing agents to form the foamed structure in a polymeric matrix. Such blowing agents have included, for example, azo compounds, various volatile organic compounds (VOCs) and chlorofluorocarbons (CFCs). The chemical blowing agents typically undergo some form of chemical change, including chemical reaction with the material that forms the polymer matrix (usually at a predetermined temperature/pressure) that causes the release of a gas, such as nitrogen, carbon dioxide, or carbon monoxide. One of the most frequently used chemical blowing agents is water. The physical blowing agents typically are dissolved in the polymer or polymer precursor material and then expand volumetncaily (again at a predetermined temperature/pressure) to contribute to the formation of the foamed structure. Physical blowing agents are frequently used in connection with thermoplastic foams, although chemical blowing agents can be used in place of or in addition to physical blowing agents in connection with thermoplastic foam. For example, it is known to use chemical blowing agent in connection with the formation of polyvinyl chloride-based foams. It is common to use chemical blowing and/or physical blowing agents in connection with thermosetting foams. Of course, it is possible that certain compounds and the compositions that contain them may at once constitute a chemical and a physical blowing agent.

It was common in the past that the CFCs were used as standard blowing agents in the preparation of isocyanate-based foams, such as rigid and flexible polyurethane and polyisocyanurate foams. For example, CCl₃F (CFC-11) had become a standard blowing agent. However, the use of this material has been banned by International treaty on the grounds that its release into the atmosphere damages the ozone layer in the stratosphere. As a consequence, it is no longer generally common that neat CFC-11 is used as a standard blowing agent for forming thermosetting foams, such as isocyanate-based foams and phenolic foams.

The problems with CFCs led to the more frequent utilization hydrogen-containing chlorofluoroalkanes (HCFCs). For example, CHCl₂CF₃ (HCFC-123), CH₂ClCHClF (HCFC-141b) have relatively short lifetimes in the atmosphere. However, while HCFCs are considered to be environmentally friendly blowing agents relative to CFCs, such compounds still contain some chlorine, and therefore have an "Ozone Depletion Potential" (called "ODP"). Because of the non-zero ODP, HCFCs have been targeted for eventual removal from use.

Another known class of blowing agents is the non-chlorinated, partially hydrogenated fluorocarbons (called "HFCs"). Certain of the HFC currently being used as blowing agents have at least one potentially serious problem, namely that they generally have relatively high intrinsic thermal conductivity properties (i.e., poor thermal insulation). On the other hand, foams made with certain of the more modern HFC blowing agents, such as CF₃CH₂CF₂H ("HFC-245fa") offer improved thermal insulation, due in part to the low thermal conductivity of HFC-245fa vapor, and due in part to the fine cell structure HFC-245fa imparts to the foams. HFC-245fa has been widely used in insulation applications, particularly refrigerator, freezer, refrigerator/freezer and spray foam applications. Nevertheless, many HFC fluids share the disadvantage of having relatively high global warming potentials, and it is desirable to use hydrofluorocarbon or other fluorinated fluids having as low global warming potentials as possible while maintaining the desired performance in use properties. Even the more modem HFCs, such as HFC-245fa, HFC-134a, HFC-365mfc, and others, exhibit a higher than desirable global warming potential, albeit low relative to other HFCs. Thus, the use of HFCs as blowing agents in foam insulation, particularly rigid foam insulation, has resulted in HFCs being less desirable candidates for blowing agents in commercial foam insulation.

Hydrocarbon blowing agents are also known. For example, U.S. Pat. No. 5,182,309 to Hutzen teaches the use of iso- and normal-pentane in various emulsion mixtures. Another example of hydrocarbon blowing agents is cyclopentane, as taught by U.S. Pat. No. 5,096,933- Volkert. U.S. Patent 5,013,846 discloses an azeotrope containing HF and CF₃CH=CHCL (HFCO-1233zd). Although many hydrocarbon blowing agents, such as cyclopentane, and isomers of pentane, are zero ozone depleting agents and exhibit very low global warming potential, such materials are less than fully desirable because foams produced from these blowing agents lack the same degree of thermal insulation efficiency as foams made with, for example, HFC-245fa blowing agent. Further, the hydrocarbon blowing agents are extremely flammable, which is undesirable. Also, certain hydrocarbon blowing agents have inadequate miscibility in certain situations with material from which the foam is formed, such as many of the polyester polyols commonly used in polyisocyanurate modified polyurethane foam. The use of these alkanes frequently requires a chemical surfactant to obtain a suitable mixture.

There has thus been an increasing need for new compounds and compositions that are attractive alternatives to the compositions heretofore used as blowing agents in these and other applications. Applicants have thus recognized a need for new fluorocarbon based compounds and compositions that offer effective alternatives to, and are considered environmentally safer substitutes for, CFCs and HCFCs. It is generally considered highly desirable, however, that any potential substitute must also possess properties, or impart properties to the foam, that are at least comparable to those associated with many of the most widely used blowing agents, such as vapor phase thermal conductivity (low k-factor), low- or no- toxicity, among others.

One such other potentially important property in many applications is flammability. That is, it is considered either important or essential in many applications, including particularly in blowing agent applications, to use compositions which are of low flammability or are non-flammable. As used herein, the term "nonflammable" refers to compounds or compositions which are determined to be nonflammable as determined in accordance with ASTM standard E-681, dated 2002. Unfortunately, many HFC's which might otherwise be desirable for used in refrigerant compositions are not non-flammable. For example, the fluoroalkane difluoroethane (HFC-152a) and the fluoroalkene 1,1,1-trifluorpropene (HFO-1243zf) are each flammable and therefore not viable for use in many applications.

It has been suggested to use bromine-containing halocarbon additives to decrease flammability of certain materials, including foam blowing agents, in U.S. Patent 5,900,185-Tapscott. The additives in this patent are said to be characterized by high efficiency and short atmospheric lifetimes, that is, low ozone depletion potential (ODP) and a low global warming potential (GWP).

While the brominated olefins described in Tapscott may have some level of effectiveness as anti-flammability agents in connection with certain materials, there is no disclosure of the use of such materials as a blowing agent. Furthermore, it is believed that such compounds may also have certain disadvantages. For example, applicants have come to recognize that many of the compounds identified in Tapscott will have a relatively low efficiency as a blowing agent due to the relatively high molecular weight of such compounds. In addition, it is believed that many of the compounds disclosed in Tapscott will encounter problems when used as a blowing agent due to the relatively high boiling point of such compounds. Moreover, it is understood by applicants that many compounds which have a high level of substitution may possess undesirable toxicity properties and/or other undesirable properties, such as potentially environmentally undesirable bioaccumulation.

While Tapscott indicates that bromine-containing alkenes having from 2 to 6 carbon atoms may also contain fluorine substituents, this patent appears to suggest that fluorine-containing compounds are less than fully desirable from the standpoint of environmental safety by noting that "non-fluorine-containing bromoalkanes will have very short atmospheric lifetimes due to reaction with tropospheric hydroxyl free radicals." (Col. 8, I. 34 - 39).

Furthermore, It is generally considered desirable for blowing agent substitutes to be effective without major engineering changes to conventional equipment and systems used In foam preparation and formation.

Applicants have thus come to appreciate a need for compositions, and particularly blowing agents, foamable compositons, foamed articles and methods and systems for forming foam, which provide beneficial properties and/or avoid one or more of the disadvantages noted above. Applicants have thus come to appreciate a need for compositions, and particularly blowing agents, that are potentially useful in numerous applications, while avoiding one or more of the disadvantages noted above.

This invention relates to compositions, methods and systems having utility in numerous applications, including particularly in connection with compositions, methods, systems and agents relating to polymeric foams.

### SUMMARY

Applicants have found that the above-noted need, and other needs, can be satisfied by blowing agent compositions, foamable compositions, foams and/or foamed articles comprising HFCO-1233zd.

The term "HFO-1234" is used herein to refer to all tetrafluoropropenes. Among the tetrafluoropropenes are included 1,1,1,2-tetrafluoropropene (HFO-1234yf) and both cis- and trans-1,1,1,3-tetrafluoropropene (HFO-1234ze). The term HFO-1234ze is used herein generically to refer to 1,1,1,3-tetrafluoropropene, Independent of whether it is the cis- or trans- form. The terms "clsHFO-1234ze" and "transHFO-1234ze" are used herein to describe the cis- and transforms of 1,1,1,3-tetrafluoropropene respectively. The term "HFO-1234ze" therefore includes within its scope clsHFO-1234ze, transHFO-1234ze, and all combinations and mixtures of these.

The term "HFO-1233" is used herein to refer to all trifluoro, monochloropropenes. Among the trifluoro,monochloropropenes are included 1,1,1,trifluoro-2,chloro-propene (HFCO-1233xf) and both cis- and trans-1,1,1-trifluo-3,chlororopropone (HFCO-1233zd). The term HFCO-1233zd is used herein generically to refer to 1,1,1-trifluo-3,chloropropene, independent of whether it is the cis- or trans- form. The terms "cisHFCO-1233zd" and "transHFCO-1233zd" ara used herein to describe the cis- and trans- forms of 1, 1, 1-trifluo,3-chlororopropene, respectively. The term "HFCO-1233zd" therefore includes within its scope cisHFCO-1233zd, transHFCO-1233zd, and all combinations and mixtures of these.

The term "HFO-1225" is used herein to refer to all pentafluoropropenes. Among such molecules are included 1,1,1,2,3 pentafluoropropene (HFO-1225yez), both cis-and trans- forms thereof. The term HFO-1225yez is thus used herein generically to refer to 1,1,1,2,3 pentafluoropropene, independent of whether it is the cis- or transform. The term "HFO-1225yez" therefore includes within Its scope cisHFO-1225yez, transHFO-1225yez, and all combinations and mixtures of these.

The present invention provides also methods and systems which utilize the compositions of the present invention, including methods and systems for foam blowing.

The present invention provides a thermal insulating foam as set out in claim 1. The present invention further provides a method of manufacturing a thermal insulating foam as set out in claim16 and a use of the thermal insulating foam of the invention as an appliance foam as set out in claim 15.

The present invention provides a thermal insulating, closed cell foam comprising a plurality of polymeric cells and a composition contained in at least one of said cells, said composition comprising at least one blowing agent comprising HFCO-1233zd (1-chloro-3,3,3-trifluoropropene), wherein the HFCO-1233zd is present in the blowing agent in an amount of at least 5% by weight of the blowing agent.

The present invention further provides a method of manufacturing a thermal insulating, closed cell foam as described above, said method comprising (a) providing a blowing agent composition comprising at least one blowing agent comprising HFCO-1233zd (1-chloro - 3,3,3-trifluoropropene); (b) adding the blowing agent composition to a foamable composition; and (c) foaming the foamable composition to form a foam or cellular structure.

The present invention further provides a use of a thermal insulating, closed cell foam as described above, as an appliance foam selected from refrigerator foams, freezer foams, refrigerator/freezer foams and panel foams.

### DETAILED DESCRIPTION OF PREFERRED EMBODIMENTS

Use of HFCO-1233zd in the preparation of foams according to the invention is advantageous for a number of important reasons. For example, applicants believe, based at least in part on mathematical modelling, that the fluoroolefin used in the present invention will not have a substantial negative affect on atmospheric chemistry,being a.negligible contributor to ozone depletion in comparison to some other halogenated species. The preferred compositions of the present invention thus have the advantage of not contributing substantially to ozone depletion. The preferred compositions also do not contribute substantially to global warming compared to many of the hydrofluoroalkanes presently in use.

In certain preferred forms, compositions of the present invention have a Global Warming Potential (GWP) of not greater than 1000, more preferably not greater than about 500, and even more preferably not greater than 150. In certain embodiments, the GWP of the present compositions is not greater than 100 and even more preferably not greater than 75. As used herein, "GWP" is measured relative to that of carbon dioxide and over a 100 year time horizon, as defined in "The Scientific Assessment of Ozone Depletion, 2002, a report of the World Meteorological Association's Global Ozone Research and Monitoring Project," which is incorporated herein by reference.

In certain preferred forms, the present compositions also preferably have an Ozone Depletion Potential (ODP) of not greater than 0.05, more preferably not greater than 0.02 and even more preferably about zero. As used herein, "ODP" is as defined in "The Scientific Assessment of Ozone Depletion, 2002, A report of the World Meteorological Association's Global Ozone Research and Monitoring Project," which is incorporated herein by reference.

The amount of HFCO-1233zd contained in the present compositions can vary widely, depending the particular application. Moreover, the compositions of the present invention can be azeotropic, azeotrope-like or non-azeotropic.

### B. OTHER COMPONENTS - BLOWING AGENT COMPOSITIONS

It is contemplated that in certain embodiments of the present invention the blowing agent compositions consist of or consist essentially of HFCO-1233zd. Thus, the present invention includes methods and systems which include HFCO-1233zd as a blowing agent without the presence of any substantial amount of additional components. However, one or more compounds or components that are HFCO-1233zd are optionally, but preferably, included in the blowing agent compositions of the present invention. Such optional additional compounds include, but are not limited to, other compounds which also act as blowing agents (hereinafter referred to for convenience but not by way of limitation as co-blowing agents), surfactants, polymer modifiers, toughening agents, colorants, dyes, solubility enhancers, rheology modifiers, plasticizing agents, flammability suppressants, antibacterial agents, viscosity reduction modifiers, fillers, vapour pressure modifiers, nucleating agents, and catalysts. In certain preferred embodiments, dispersing agents, cell stabilizers, surfactants and other additives may also be incorporated into the blowing agent compositions of the present invention. Certain surfactants are optionally but preferably added to serve as cell stabilizers. Some representative materials are sold under the names of DC-193, B-8404, and L-5340 which are, generally, polysiloxane polyoxyalkylene block co-polymers such as those disclosed in U.S. Patent Nos. 2,834,748, 2,917,48t), and 2,848,458. Other optional additives for the blowing agent mixture may include flame retardants such as tri(2-chloroethyl)phosphate, tri(2-chloropropyl)phosphate, tri(2,3-dibromopropyl)-phosphate, tr(1,3-dichloropropyl) phosphate, diammonium phosphate, various halogenated aromatic compounds, antimony oxide, aluminum trihydrate and polyvinyl chloride.

With respect to nucleating agents, all known compounds and materials having nucleating functionality are available for use in the present invention, including particularly talc.

Of course other compounds and/or components that modulate a particular property of the compositions (such as cost for example) may also be included in the present compositions.

Thus, the preferred embodiments of the present compositions include, HFCO-1233zd, and one or more co-blowing agents. The co-blowing agent in accordance with the present invention can comprise a physical blowing agent, a chemical blowing agent (which preferably in certain embodiments comprises water) or a blowing agent having a combination of physical and chemical blowing agent properties. It will also be appreciated that the blowing agents included in the present compositions, may exhibit properties in addition to those required to be characterized as a blowing agent. For example, it is contemplated that the blowing agent compositions of the present invention may include components, which also impart some beneficial property to the blowing agent composition or to the foamable composition to which it is added. For example, HFCO-1233zd or for the co-blowing agent can also act as a polymer modifier or as a viscosity reduction modifier.

Although it is contemplated that a wide range of co-blowing agents may be used in accordance with the present invention, in certain embodiments it is preferred that the blowing agent compositions of the present invention include one or more HFCs as co-blowing agents, more preferably one or more C1-C4 HFCs, and/or one or more hydrocarbons, more preferably C4 - C6 hydrocarbons. For example, with respect to HFCs, the present blowing agent compositions may include one or more of difluoromethane (HFC-32), fluoroethane (HFC-161), difluoroethane (HFC-152), trifluoroethane (HFC-143), tetrafluoroethane (HFC-134), pentafluoroethane (HFC-125), pentafluoropropane (HFC-245), hexafluoropropane (HFC-236), heptafluoropropane (HFC-227ea), pentafluorobutane (HFC-365), hexafluorobutane (HFC-356) and all isomers of all such HFC's. With respect to hydrocarbons, the present blowing agent compositions may include in certain preferred embodiments, for example, iso, normal and/or cyclopentane for thermoset foams and butane or isobutane for thermoplastic foams. Of course other materials, such as water, CO₂, CFCs (such as trichlorofluoromethane (CFC-11) and dichlorodifluoromethane (CFC-12)), hydrochlorocarbons (HCCs such as dichloroethylene (preferably trans-dichloroethylene), ethyl chloride and chloropropane), HCFCs, Cl - C5 alcohols (such as, for example, ethanol and/or propanol and/or butanol), Cl - C4 aldehydes, Cl - C4 ketones, Cl - C4 ethers (including ethers (such as dimethyl ether and diethyl ether), diethers (such as dimethoxy methane and diethoxy methane)), and methyl formate including combinations of any of these may be included, although such components are contemplated to be not preferred in many embodiments due to negative environmental impact.

In certain embodiments, one or more of the following HFC isomers are preferred for use as co-blowing agents in the compositions of the present invention:
1,1,1,2,2-pentafiuoroethane (HFC-125)
1,1,2.2-tetrafluoroethane (HFC-134)
1,1,1,2-tetrafluoroethane (HFC-134a)
1,1-difluoroethane (HFC-152a)
1,1,1,2,3,3,3.heptafluompropaine (HFC-227ea)
1,1,1,3,3,3-hexafluoropropane (HFC-236fa)
1,1,1,3,3-pentafluoropropane (HFC-245fa) and
1,1,1,3,3-pentafluorobutane (HFC-365mfc).

The relative amount of any of the above noted additional co-blowing agents, as well as any additional components which may be included in present compositions, can vary widely according to the particular application for the composition.

Accordingly, in certain embodiments it is preferred that the blowing agent composition of the present invention comprise atleastone co-blowing agent and an amount of HFCO-1233zd sufficient to produce a blowing agentcomposition which is overall non-flammable. Thus, in such embodiments, the relative amounts of the co-blowing agent in comparison to HFCO-1233zd will depend, at least in part, upon the flammability of the co-blowing agent.

The blowing agent compositions of the present invention may include the compounds of the present invention in widely ranging amounts. It is generally preferred, however, that for preferred compositions for use as blowing agents in accordance with the present invention, HFCO-1233zd is present in an amount that is at least 5% by weight, and even more preferably at least 15% by weight, of the composition. In certain preferred embodiments, the blowing agent comprises at least 50% by weight of the present blowing agent compound(s), and in certain embodiments the blowing agent consists essentially of compound in accordance with the present invention. In this regard it is noted that the use of one or more co-blowing agents Is consistent with the novel and basic features of the present invention. For example, it is contemplated that water will be used as either a co-blowing or In combination with other co-blowing agents (such as, for example, pentane, particularly cyclopentane) in a large number embodiments.

In many preferred embodiments, a co-blowing agent comprising water is included in the compositions, most preferably in compositions directed to the use of thermosetting foams.

In certain preferred embodiments, the blowing agent composition comprises from 30% to 95% by weight of HFCO-1233zd and a co-blowing agent, preferably from 5% to about 65% by weight of co-blowing agent. In certain of such embodiments the co-blowing agent comprises, and preferably consists essentially of, H₂O, HFCs, hydrocarbons, alcohols (preferably C2, C3 and/or C4 alcohols), CO₂, and combinations of these.

In preferred embodiments in which the co-blowing agent comprises H₂O in an amount of from 5% by weight to 50% by weight of the total blowing agent composition, more preferably from 10% by weight to 40% by weight, and even more preferably of from 10% to 20% by weight of the total blowing agent.

In preferred embodiments in which the co-blowing agent comprises CO₂, the composition comprises CO₂ in an amount of from 5% by weight to 60% by weight of the total blowing agent composition, more preferably from 20% by weight to 50% by weight, and even more preferably of from 40% to

In preferred embodiments in which the co-blowing agent comprises alcohols, (preferably C2, C3 and/or C4 alcohols), the composition comprises alcohol in an amount of from 5% by weight to 40% by weight of the total blowing agent composition, more preferably from 10% by weight to 40% by weight, and even more preferably of from 15% to 25% by weight of the total blowing agent.

For compositions which include HFC co-blowing agents, the HFC co-blowing agent (preferably C2, C3, C4 and/or C5 HFC), and even more preferably difluoromethane (HFC-152a) (HFC-152a being particularly preferred for extruded thermoplastics) and/or pentafluoropropane (HFC-245)), is preferably present in the composition in amounts of from 5% by weight to 80% by weight of the total blowing agent composition, more preferably from 10% by weight to 75% by weight, and even more preferably of from 25% to 75% by weight of the total blowing agent. Furthermore, in such embodiments, the HFC is preferably C2 - C4 HFC, and even more preferably C3 HFC, with penta-fluorinated C3 HFC, such as HFC-245fa, being highly preferred in certain embodiments.

For compositions which include HC co-blowing agents, the HC co-blowing agent (preferably C3, C4 and/or C5 HC) is preferably present in the composition in amounts of from 5% by weight to 80% by weight of the total blowing agent composition, and even more preferably from 20% by weight to 60% by weight of the total blowing agent.

### C. OTHER COMPONENTS - FOAMABLE COMPOSITIONS

As is known to those skilled in the art, foamable compositions generally include one or more components capable of forming foam. As used herein, the term "foam foaming agent" is used to refer to a component, or a combination on components, which are capable of forming a foam structure, preferably a generally cellular foam structure. The foamable compositions useful in the present invention include such component(s) and a blowing agent compound, HFCO-1233zd in accordance with the present invention. In certain embodiments, the one or more components capable of forming foam comprise a thermosetting composition capable of forming foam and/orfoamable compositions. Examples of thermosetting compositions include polyurethane and polyisocyanurate foam compositions, and also phenolic foam compositions. This reaction and foaming process may be enhanced through the use of various additives such as catalysts and surfactant materials that serve to control and adjust cell size and to stabilize the foam structure during formation. Furthermore, is contemplated that any one or more of the additional components described above with respect to the blowing agent compositions of the present invention could be incorporated into the foamable composition of the present invention. In such thermosetting foam embodiments, one or more of the present compositions are included as or part of a blowing agent in a foamable composition, or as a part of a two or more part foamable composition, which preferably, includes one or more of the components capable of reacting and/or foaming under the proper conditions to form a foam or cellular structure.

In certain other embodiments of the present invention, the one or more components capable of foaming comprise thermoplastic materials, particularly thermoplastic polymers and/or resins. Examples of thermoplastic foam components include polyolefins, such as for example monovinyl aromatic compounds of the formula Ar-CHCH2 wherein Ar is an aromatic hydrocarbon radical of the benzene series such as polystyrene (PS). Other examples of suitable polyolefin resins in accordance with the invention include the various ethylene resins including the ethylene homopolymers such as polyethylene and ethylene copolymers, polypropylene (PP) and polyethyleneterepthalate (PET). In certain embodiments, the thermoplastic foamable composition is an extrudable composition.

### METHODS AND SYSTEMS

It is contemplated that all presently known and available methods and systems for forming foam are readily adaptable for use in connection with the present invention. For example, the methods of the present invention generally require incorporating a blowing agent in accordance with the present invention into a foamable or foam forming composition and then foaming the composition, preferably by a step or series of steps which include causing volumetric expansion of the blowing agent in accordance with the present invention. In general, it is contemplated that the presently used systems and devices for incorporation of blowing agent and for foaming are readily adaptable for use in accordance with the present invention. In fact, it is believed that one advantage of the present invention is the provision of an improved blowing agent which is generally compatible with existing foaming methods and systems.

Thus, it will be appreciated by those skilled in the art that the present invention comprises methods and systems for foaming all types of foams, including thermosetting foams, thermoplastic foams and formed-in-place foams. Thus, one aspect of the present invention is the use of the present blowing agents in connection conventional foaming equipment, such as polyurethane foaming equipment, at conventional processing conditions. The present methods therefore include masterbatch type operations, blending type operations, third stream blowing agent addition, and blowing agent addition at the foam head.

With respect to thermoplastic foams, the preferred methods generally comprise introducing a blowing agent in accordance with the present invention into a thermoplastic material, preferably thermoplastic polymer such as polyolefin, and then subjecting the thermoplastic material to conditions effective to cause foaming. For example, the step of introducing the blowing agent into the thermoplastic material may comprise introducing the blowing agent into a screw extruder containing the thermoplastic, and the step of causing foaming may comprise lowering the pressure on the thermoplastic material and thereby causing expansion of the blowing agent and contributing to the foaming of the material.

It will be appreciated by those skilled in the art, especially in view of the disclosure contained herein, that the order and manner in which the blowing agent of the present invention is formed and/or added to the foamable composition does not generally affect the operability of the present invention. For example, in the case of extrudable foams, it is possible that the various components of the blowing agent, and even the components of the foamable composition, be not be mixed in advance of introduction to the extrusion equipment, or even that the components are not added to the same location in the extrusion equipment. Moreover, the blowing agent can be introduced either directly or as part of a premix, which is then further added to other parts of the foamable composition.

Thus, in certain embodiments it may be desired to introduce one or more components of the blowing agent at first location in the extruder, which is upstream of the place of addition of one or more other components of the blowing agent, with the expectation that the components will come together in the extruder and/or operate more effectively in this manner. Nevertheless, in certain embodiments, two or more components of the blowing agent are combined in advance and introduced together into the foamable composition, either directly or as part of premix which is then further added to other parts of the foamable composition.

One embodiment of the present invention relates to methods of forming foams, and preferably polyurethane and polyisocyanurate foams. The methods generally comprise providing a blowing agent composition of the present inventions, adding (directly or indirectly) the blowing agent composition to a foamable composition, and reacting the foamable composition under the conditions effective to form a foam or cellular structure, as is well known in the art. Any of the methods well known in the art, such as those described in "Polyurethanes Chemistry and Technology," Volumes I and II, Saunders and Frisch, 1962, John Wiley and Sons, New York, NY, may be used or adapted for use in accordance with the foam embodiments of the present invention. In general, such preferred methods comprise preparing polyurethane or polyisocyanurate foams by combining an isocyanate, a polyol or mixture of polyols, a blowing agent or mixture of blowing agents comprising one or more of the present compositions, and other materials such as catalysts, surfactants, and optionally, flame retardants, colorants, or other additives.

It is convenient in many applications to provide the components for polyurethane or polyisocyanurate foams in pre-blended formulations. Most typically, the foam formulation is pro-blended into two components. The isocyanate and optionally certain surfactants and blowing agents comprise the first component, commonly referred to as the "A" component. The polyol or polyol mixture, surfactant, catalysts, blowing agents, flame retardant, and other isocyanate reactive components comprise the second component, commonly referred to as the "B" component. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, and froths. Optionally, other ingredients such as fire retardants, colorants, auxiliary blowing agents, and even other polyols can be added as one or more additional streams to the mix head or reaction site. Most preferably, however, they are all incorporated into one B-component as described above.

The present methods and systems also include forming a one component foam, preferably polyurethane foam, containing a blowing agent in accordance with the present invention. In certain preferably embodiments, a portion of the the blowing agent is contained in the foam forming agent, preferably by being dissolved in a foam forming agent which is liquid at the pressure within the container, a second portion of the blowing agent is present as a separate gas phase. In such systems, the contained/dissolved blowing agent performs, in large part, to cause the expansion of the foam, and the separate gas phase operates to impart propulsive force to the foam forming agent. Such one component systems are typically and preferably packaged in a container, such as an aerosol type can, and the blowing agent of the present invention thus preferably provides for expansion of the foam and/or the energy to transport the foam/foamable material from the package, and preferably both. In certain embodiments, such systems and methods comprise charging the package with a fully formulated system (preferably isocyanate/polyol system) and incorporating a gaseous blowing agent in accordance with the present invention into the package, preferably an aerosol type can.

Any of the methods well known in the art, such as those described in "Polyurethanes Chemistry and Technology," Volumes I and II, Saunders and Frisch, 1962, John Wiley and Sons, New York, NY, may be used or adapted for use in accordance with the foam forming embodiments of the present invention.

It is contemplated also that in certain embodiments it may be desirable to utilize the present compositions when in the supercritical or near supercritical state as a blowing agent.

### THE FOAMS

The invention also relates to all foams, (incuding but not limited to closed cell foam, open cell foam, rigid foam, flexible foam, and integral skin) prepared from a polymer foam formulation containing a blowing agent comprising the compositions of the invention. Applicants have found that one advantage of the foams, and particularly thermoset foams such as polyurethane foams, in accordance with the present invention is the ability to achieve, preferably in connection with thermoset foam embodiments, exceptional thermal performance, such as can be measured by the K-factor or lambda, particularly and preferably under low temperature conditions. Although it is contemplated that the present foams, particularly thermoset foams of the present invention, may be used in a wide variety of applications, in certain preferred embodiments the present invention comprises appliance foams in accordance with the present invention, including refrigerator foams, freezer foams, refrigerator/freezer foams, panel foams, and other cold or cryogenic manufacturing applications.

The foams in accordance with the present invention, in certain preferred embodiments, provide one or more exceptional features, characteristics and/or properties, including: thermal insulation efficiency (particularly for thermoset foams), dimensional stability, compressive strength, aging of thermal insulation properties, all in addition to the low ozone depletion potential and low global warming potential associated with many of the preferred blowing agents of the present invention. In certain highly preferred embodiments, the present invention provides thermoset foam, including such foam formed into foam articles, which exhibit improved thermal insulation relative to foams made using the same blowing agent (or a commonly used blowing agent HFC-245fa) in the same amount but without the HFCO 1233zd in accordance with the present invention. In certain highly preferred embodiments, the thermoset foams, and preferably polyurethane foams, of the present invention exhibit a K-factor in W.m⁻¹K⁻¹ (BTU in / hr ft² °F) at 4.4°C (40°F) of not greater than 0.0202 (0.14), more preferably not greater than 0.0195 (0.135), and even more preferably not greater than 0.0187 (0.13). Furthermore, in certain embodiments, it is preferred that the thermoset foams, and in preferably the polyurethane foams of the present invention exhibit a K-factor in W.m⁻¹ K⁻¹ (BTU in/hr ft² OF) at 23.9°C (75 °F) of not greater than 0.0231 (0.16), more preferably not greater than 0.0216 (0.15), and even more preferably not greater 0.0209 (0.145).

In other preferred embodiments, the present foams exhibit improved mechanical properties relative to foams produced with blowing agents outside the scope of the present invention. For example, certain preferred embodiments of the present invention provide foams and foam articles having a compressive strength which is superior to, and preferably at least 10 relative percent, and even more preferably at least 15 relative percent greater than a foam produced under substantially identical conditions by utilizing a blowing agent consisting of cyclopentane. Furthermore, it is preferred in certain embodiments that the foams produced in accordance with the present invention have compressive strengths that are on a commercial basis comparable to the compressive strength produced by making a foam under substantially the same conditions except wherein the blowing agent consists of HFC-245fa. In certain preferred embodiments, the foams of the present invention exhibit a compressive strength of at least 12,5% yield (in the parallel and perpendicular direction), and even more preferably at least 13% yield in each of said directions.

### EXAMPLES

Example 1 is provided for reference purposes only and does not form part of the invention. Example 2 illustrates the present invention.

### EXAMPLE 1 - POLYURETHANE FOAM K-FACTORS (Reference Example)

This example further demonstrates the unexpected performance of blowing agents in accordance with the present invention as used in the production of polyurethane foams. Three appliance polyurethane foams are made, each one being formed using substantially the same materials, procedures and equipment, with the exception that different blowing agents are used. The polyol system is a commercially available, appliance-type formulation adapted for use with a liquid blowing agent. A foam machine is used to form the foam. The blowing agents are used in essentially equal molar concentrations. After formation, each foam is cut into samples suitable for measuring k-factors, which are found to be as indicated in the following Table 1 B below. The blowing agent composition in weight percent on the basis of total blowing agent is disclosed in Table 1A below:

**TABLE 1A**

| Blowing Agent | A | B | C |
|---|---|---|---|
| | | | |
| HFO-1234ze* | 85 | 0 | 60 |
| HFC-245fa | 15 | 100 | 11 |
| Cyclopentane | 0 | 0 | 29 |
| *100% cis | | | |

**TABLE 1B**

| Mean Temperature in °C (°F) | K-factor in W.m⁻¹ K⁻¹ (BTU in / hr ft² °F) | | |
|---|---|---|---|
| | A | B | C |
| 4.44 (40) | 0.0167 (0.116) | 0.0172 (0.119) | 0.0167 (0.116) |
| 23.9(75) | 0.0189 (0.131) | 0.0193 (0.134) | 0.0190 (0.132) |
| 43.3(110) | 0.0211 (0.146) | 0.0215 (0.149) | 0.0213 (0.148) |

### EXAMPLE2 - POLYURETHANE FOAM K-FACTORS

A further experiment was performed using the same polyol formulation and isocyanate as in Example 1. The foam is prepared by hand mix, the blowing agents consist of HFCO- 1233zd (CF3CF=CFCl)* in about the same mole percentage of the foamable composition as the blowing agent in Example 1. K-factors are found to be as indicated in Table 2 below.

**TABLE 2**

| Mean Temperature in °C (°F) | K-factor in W.m⁻¹K⁻¹ (BTU in/hr ft²°F) |
|---|---|
| 4.44 (40) | 0.0183 (0.127) |
| 23.9 (75) | 0.0206 (0.143) |
| 43.3 (110) | 0.0229 (0.159) |

## Claims

1. A thermal insulating, closed cell foam comprising a plurality of polymeric cells and a composition contained in at least one of said cells, said composition comprising at least one blowing agent comprising HFCO-1233zd (1-chloro-3,3,3-trifluoropropene), wherein the HFCO-1233zd is present in the blowing agent in an amount of at least 5% by weight of the blowing agent.

2. The foam according to claim 1, wherein the foam is a thermoset foam.

3. The foam of claim 2, wherein the foam is a polyurethane foam, a polyisocyanurate foam or a phenolic foam.

4. The foam of claim 2, which has a K-factor at 4.4°C (40°F) of not greater than 0.0202 W.rn⁻¹ K⁻¹ (0.14 BTU in/hr ft²°F).

5. The foam of claim 2, which has a K-factor of 23.9°C (75°F) of not greater than 0.0231 W.rn⁻¹ K⁻¹ (0.16 BTU in/hr ft²°F).

6. The foam according to claim 1, wherein the foam is a thermoplastic foam.

7. The foam of claim 6, wherein the foam is a polyolefin foam.

8. The foam of any preceding claim, wherein the blowing agent consists of HFCO-1233zd.

9. The foam of any preceding claim, wherein the HFCO-1233zd comprises cis-HFCO-1233zd.

10. The foam of any preceding claim, wherein the HFCO-1233zd comprises trans-HFCO-1233zd.

11. The foam of claim 1, wherein the composition further comprises at least one co-blowing agent.

12. The foam of claim 11, wherein the at least one co-blowing agent is selected from the group consisting of water, CO₂, CFCs, HCCs, HCFCs, C1-C5 alcohols, C1-C4 aldehydes, C1-C4 ketones, C1-C4 ethers, C1-C4 HFCs, C4-C6 hydrocarbons and combinations of two or more of these.

13. The foam of claim 12, wherein the foam is a thermoplastic foam and the co-blowing agent is selected from the group consisting of butane and isobutane.

14. The foam of claim 12, wherein the foam is a thermoset foam and the co-blowing agent is selected from the group consisting of iso, normal and cyclopentane.

15. Use of a foam as defined in any preceding claim as an appliance foam selected from refrigerator foams, freezer foams, refrigerator/freezer foams and panel foams.

16. A method of providing a thermal insulating, closed cell foam according to any one of claims 1 to 14, said method comprising (a) providing a blowing agent composition comprising at least one blowing agent comprising HFCO-1233zd (1-chloro-3,3,3-trifluoropropene); (b) adding the blowing agent composition to a foamable composition;
and (c) foaming the foamable composition to form a foam or cellular structure.

## Patentansprüche

1. Geschlossenzelliger Wärmedämmschaumstoff, umfassend mehrere Polymerzellen und eine in mindestens einer der Zellen enthaltene Zusammensetzung, die mindestens ein HFCO-1233zd (1-Chlor-3,3,3-trifluorpropen) umfassendes Treibmittel umfasst, wobei das HFCO-1233zd in dem Treibmittel in einer Menge von mindestens 5 Gew.- %, bezogen auf das Treibmittel, vorliegt.

2. Schaumstoff nach Anspruch 1, bei dem es sich um einen duroplastischen Schaumstoff handelt.

3. Schaumstoff nach Anspruch 2, bei dem es sich um einen Polyurethanschaumstoff, einen Polyisocyanuratschaumstoff oder einen Phenolschaumstoff handelt.

4. Schaumstoff nach Anspruch 2, der einen K-Faktor bei 4,4°C (40°F) von höchstens 0,0202 W.m⁻¹K⁻¹ (0,14 BTU in/h ft² °F) aufweist.

5. Schaumstoff nach Anspruch 2, der einen K-Faktor bei 23, 9°C (75°F) von höchstens 0,0231 W.m⁻¹K⁻¹ (0,16 BTU in/h ft² °F) aufweist.

6. Schaumstoff nach Anspruch 1, bei dem es sich um einen thermoplastischen Schaumstoff handelt.

7. Schaumstoff nach Anspruch 6, bei dem es sich um einen Polyolefinschaumstoff handelt.

8. Schaumstoff nach einem der vorhergehenden Ansprüche, wobei das Treibmittel aus HFCO-1233zd besteht.

9. Schaumstoff nach einem der vorhergehenden Ansprüche, wobei das HFCO-1233zd cis-HFCO-1233zd umfasst.

10. Schaumstoff nach einem der vorhergehenden Ansprüche, wobei das HFCO-1233zd trans-HFCO-1233zd umfasst.

11. Schaumstoff nach Anspruch 1, wobei die Zusammensetzung ferner mindestens ein Cotreibmittel umfasst.

12. Schaumstoff nach Anspruch 11, wobei das mindestens eine Cotreibmittel aus der Gruppe bestehend aus Wasser, CO₂, FCKWs, H-CKWs, H-FCKWs, C1-C5-Alkoholen, C1-C4-Aldehyden, C1C4-Ketonen, C1-C4-Ethern, C1-C4-FKWs, C4-C6-Kohlenwasserstoffen und Kombinationen von zwei oder mehr davon ausgewählt ist.

13. Schaumstoff nach Anspruch 12, wobei es sich bei dem Schaumstoff um einen thermoplastischen Schaumstoff handelt und das Cotreibmittel aus der Gruppe bestehend aus Butan und Isobutan ausgewählt ist.

14. Schaumstoff nach Anspruch 12, wobei es sich bei dem Schaumstoff um einen duroplastischen Schaumstoff handelt und das Cotreibmittel aus der Gruppe bestehend aus Isopentan, n-Pentan und Cyclopentan ausgewählt ist.

15. Verwendung eines Schaumstoffs gemäß einem der vorhergehenden Ansprüche als Geräteschaum, ausgewählt aus Kühlschrankschaumstoffen, Gefrierschrankschaumstoffen, Kühlschrank/Gefrierschrankschaumstoffen und Plattenschaumstoffen.

16. Verfahren zur Bereitstellung eines geschlossenzelligen Wärmedämmschaumstoffs nach einem der Ansprüche 1 bis 14, bei dem man (a) eine Treibmittelzusammensetzung, die mindestens ein HFCO-1233zd (1-Chlor-3,3,3-trifluorpropen) umfassendes Treibmittel umfasst, bereitstellt; (b) die Treibmittelzusammensetzung zu einer verschäumbaren Zusammensetzung gibt und (c) die verschäumbare Zusammensetzung zur Bildung eines Schaumstoffs oder einer zelligen Struktur zur Reaktion bringt.

## Revendications

1. Mousse d'isolation thermique à cellules fermées comprenant une pluralité de cellules polymères et une composition contenue dans au moins une desdites cellules, ladite composition comprenant au moins un agent d'expansion comprenant du HFCO-1233zd (1-chloro-3,3,3-trifluoropropène), dans laquelle le HFCO-1233zd est présent dans l'agent d'expansion en une quantité d'au moins 5 % en poids de l'agent d'expansion.

2. Mousse selon la revendication 1, dans laquelle la mousse est une mousse thermodurcie.

3. Mousse selon la revendication 2, dans laquelle la mousse est une mousse de polyuréthane, une mousse de polyisocyanurate ou une mousse phénolique.

4. Mousse selon la revendication 2, dont le facteur K à 4,4 °C (40 °F) n'excède pas 0,0202 W.m⁻¹K⁻¹ (0,14 BTU po/h pi² °F).

5. Mousse selon la revendication 2, dont le facteur K à 23,9 °C (75 °F) n'excède pas 0,0231 W.m⁻¹K⁻¹ (0,16 BTU po/h pi² °F).

6. Mousse selon la revendication 1, dans laquelle la mousse est une mousse thermoplastique.

7. Mousse selon la revendication 6, dans laquelle la mousse est une mousse polyoléfinique.

8. Mousse selon l'une quelconque des revendications précédentes, dans laquelle l'agent d'expansion est constitué de HFCO-1233zd.

9. Mousse selon l'une quelconque des revendications précédentes, dans laquelle le HFCO-1233zd comprend du cis-HFCO-1233zd.

10. Mousse selon l'une quelconque des revendications précédentes, dans laquelle le HFCO-1233zd comprend du trans-HFCO-1233zd.

11. Mousse selon la revendication 1, dans laquelle la composition comprend en outre au moins un agent de co-expansion.

12. Mousse selon la revendication 11, dans laquelle l'au moins un agent de co-expansion est choisi parmi le groupe constitué de l'eau, du CO₂, de CFC, de HCC, de HCFC, d'alcools de C₁ à C₅, d'aldéhydes de C₁ à C₄, de cétones de C₁ à C₄, d'éthers de C₁ à C₄, de HFC de C₁ à C₄, d'hydrocarbures de C₄ à C₆ et de combinaisons de deux ou plus de ceux-ci.

13. Mousse selon la revendication 12, dans laquelle la mousse est une mousse thermoplastique et l'agent de co-expansion est choisi dans le groupe constitué par le butane et l'isobutane.

14. Mousse selon la revendication 12, dans laquelle la mousse est une mousse thermodurcie et l'agent de co-expansion est choisi dans le groupe constitué par l'iso-pentane, le n-pentane et le cyclopentane.

15. Utilisation d'une mousse telle que définie dans l'une quelconque des revendications précédentes, comme mousses pour appareil choisies parmi les mousses pour réfrigérateurs, les mousses pour congélateurs, les mousses pour réfrigérateurs/congélateurs et les mousses pour panneaux.

16. Procédé de production d'une mousse d'isolation thermique à cellules fermées selon l'une quelconque des revendications 1 à 14, ledit procédé comprenant (a) l'obtention d'une composition d'agent d'expansion comprenant au moins un agent d'expansion comprenant du HFCO-1233zd (1-chloro-3,3,3-trifluoropropène) ; (b) l'ajout de la composition d'agent d'expansion à une composition expansible ; et (c) l'expansion de la composition expansible pour former une mousse ou une structure cellulaire.
